# EUROPEAN PATENT SPECIFICATION

(11) **EP 3 538 796 B1**
(45) Date of publication and mention of the grant of the patent: **06.03.2024**
(21) Application number: 17869484.0
(22) Date of filing: 06.11.2017
(51) Int. Cl.: F16J 15/46, B60C 29/00, D21C 9/06, D21C 9/18, F16L 33/22, D21D 5/06, D21F 1/74

(54) **A PRESSURE DEVICE FOR A SEALING ARRANGEMENT, A SEALING ARRANGEMENT AND AN APPARATUS FOR PROCESSING PULP**
DRUCKVORRICHTUNG FÜR EINE DICHTUNGSANORDNUNG, DICHTUNGSANORDNUNG UND VORRICHTUNG ZUR VERARBEITUNG VON ZELLSTOFF
DISPOSITIF DE PRESSION POUR AGENCEMENT D'ÉTANCHÉITÉ, AGENCEMENT D'ÉTANCHÉITÉ ET APPAREIL DE TRAITEMENT DE PÂTE DE PAPIER

(30) Priority: 11.11.2016 SE 1651480
(43) Date of publication of application: 18.09.2019
(73) Proprietor: Valmet AB, 851 94 Sundsvall (SE)
(72) Inventor: WALLIN, Per, 865 32 Alnö (SE); WALLGREN, Erik, 857 51 Sundsvall (SE)
(74) Representative: Groth & Co. KB
(86) International application number: PCT/SE2017/051104
(87) International publication number: WO 2018/088948

(56) References cited:
- EP-A1- 2 907 643
- EP-A2- 1 098 032
- WO-A1-03/041839
- WO-A1-2006/130108
- WO-A1-2012/134373
- WO-A1-2012/134373
- DE-B- 1 244 500
- FR-A1- 2 668 576
- GB-A- 1 604 686
- SE-C2- 522 486
- US-A- 2 360 761
- US-A- 2 894 635
- US-A- 3 220 340

## Description

### Technical Field

The present invention relates to sealing arrangements, for example, for use in sealing between a rotatable drum and a stationary end casing member of an apparatus for dewatering pulp, and to pressure means for a sealing arrangements, for example, for use in sealing between a rotatable drum and a stationary end casing member of an apparatus for dewatering pulp.

### Background of the Invention

Fibre lines producing cellulose-based products may comprise some type of washing equipment for separating the liquor of the cooking from the pulp. Later on in the process, washing equipment is also provided to separate bleaching liquors after the bleaching steps. There is a plurality of different types of washing equipment operating according to different principles.

When producing cellulose-based products, a roll press is frequently used for washing and/or dewatering the cellulose-based pulp. The roll press comprises two co-operating and counter-rotating press rolls, each having a permeable outer surface, a so called mantle surface, whereby the outer surface is permeable to liquid pressed out of the pulp. The pulp is deposited on the permeable outer surface and pressed in the roll nip, or the press nip, between the press rolls, whereby liquid is pressed out of the pulp. The roll press may also include one or more washing zones prior to the press nip.

Another known washing equipment is the drum washer, where the cellulose-containing pulp is deposited and dewatered on a single rotating filter drum, which has a permeable outer surface, after the addition of washing liquid, which displaces the liquor remaining on the pulp web after the preceding process step, for example a cooking step or bleaching step. The static pressure causes the contaminated liquid, called filtrate, to pass through the outer surface permeable to liquid. A further development of the original drum washer is the pressurized displacement washer, where the filtrate, under overpressure, is forced to pass through the permeable outer surface.

In general, around at least a portion of the circumference of the permeable outer surface of the drum or press roll, an axially extending and circumferential gap or space may be provided which is sealed off from the atmosphere to produce an overpressure in order to force the filtrate from the pulp, which is located on the outer surface in said gap, to pass through the permeable outer surface. By means of the sealed-off gap, the dewatering of the pulp is enhanced. Sealing arrangements including a plurality of components are generally required to seal off such a gap.

WO2010/036193 discloses sealing arrangements for sealing between a movable side casing member and the outer surface of a rotatable press roll, between the movable side casing member and an end casing member, and between the movable side casing member and a central casing member. Further, sealing arrangements for sealing between each end of a rotatable press roll and the end casing member may also be required.

WO 2012/134373 discloses sealing arrangement for sealing between rotatable drums and respective end casing members. The sealing arrangements comprises an inflatable and stiff tube arranged in a groove for providing pressure when inflated to thereby force a sealing member in a direction towards a drum to bear against a portion of and end surface of the drum.

In these prior art solutions, the inflatable tube is shaped and arranged to expand in only the direction towards the sealing member, that is, the tube has different stiffness in different directions. Accordingly, it is very important that the tube is correctly and accurately oriented in the groove. This makes it cumbersome to install a tube and/or replace a worn out tube with a new one. When installing a new tube, it is manually pushed into the groove from one open end of the groove, which groove is long, narrow and curved. For a correct and proper functioning of the tube and sealing arrangement, it is crucial that the tube is installed into the groove in the correct orientation such that the expansion of the tube when it is inflated takes place in the right direction, i.e. towards the movable sealing member to put pressure on the sealing element. During the installation, when the tube is pushed into the groove, the tube tends to turn in the groove such that it is not correctly oriented in the groove. Furthermore, the length of the inflatable tube is exactly adapted to the extension or length of the circumferential groove for a certain apparatus in order to provide the required pressure on the sealing member along its entire length. Therefore, it is necessary to hold a number of different tube lengths in stock to be able to replace a worn out tube quickly in order to avoid unnecessary long production interruptions.

Thus, there is a need within the art for improved sealing arrangements for use in, for example, sealing between a rotatable drum and a stationary end casing member in an apparatus for dewatering pulp, especially cellulose-containing pulp.

### Summary of the Invention

An object of the present invention is thus to provide improved sealing arrangements, for example, for use in sealing between a rotatable drum and a stationary end casing member of an apparatus for dewatering pulp.

The above-mentioned object of the present invention is attained by a sealing arrangement for sealing, for example, between a first drum and an end casing member included in an apparatus for processing pulp, especially cellulose-containing pulp, the first drum being rotatable about an axis of rotation in relation to the end casing member and the sealing arrangement, and the first drum being provided with a permeable outer surface which axially extends between a first end and a second end of the first drum, and at least at the first end the first drum is provided with an end surface.

The sealing arrangement according to the present invention includes a movable sealing element and a holder comprising an extended groove in which the movable sealing element is mounted, wherein the sealing arrangement comprises a pressure device comprising an elastic tube, which is expandable by a pressurizing fluid and has a rotational symmetric cross-section area, a nipple element having a nipple arranged for connection to a pressurizing fluid supply, and at least one collar arranged to connect the pressurized elastic tube to the nipple element and to fluid-tightly and lock the pressurized elastic tube to the nipple element. When pressurized, the elastic tube acts on the movable sealing element, the movable sealing element being arranged to fit into the groove and in contact with the elastic tube and when the elastic tube is pressurized, the movable sealing element is pressed in an outward direction by the expanding elastic tube to thereby bear against a surface to provide a seal. An outer surface of the collar is square shaped, circular, rounded or elliptically shaped and the collar is arranged to fit into the groove.

The sealing member may be rigid, and may, for example, be made of a polymer material.

The rotational symmetric elastic tube may be made of a flexible material, e.g. a polymer material.

According to a further aspect of the present invention, there is provided an apparatus for processing pulp, comprising at least one first drum rotatable about an axis of rotation and provided with an outer surface permeable to liquid, the outer surface axially extending between a first end and a second end of the first drum, the apparatus is adapted to receive the pulp on the outer surface of the first drum and to process the pulp situated on the outer surface while rotating the first drum, and the apparatus is adapted to process the pulp by at least dewatering the pulp, the first drum being rotatably mounted to two end casing members, at least at the first end the first drum being provided with an end surface, and at least one of the end casing members holds a sealing arrangement according to the present invention for sealing between the first drum and the respective end casing member, the first drum being rotatable in relation to the sealing arrangement.

The holder may be in the form of a circumferentially extending holder, and may e.g. comprise a circumferentially extending groove which may hold the pressure device and the sealing element. The sealing element may be elongated in the circumferential direction. The end surface may be formed by a solid circular plate, or by an end ring, or any other structure of the first drum. The end surface may be in the form of an annular surface surrounding the axis of rotation or an annular surface portion surrounding the axis of rotation. The annular surface or surface portion may be formed by an end ring.

According to another advantageous embodiment of the apparatus according to the present invention, at least one of the end casing members holds a second sealing arrangement for sealing between the second drum and the respective end casing member, the second drum being rotatable in relation to the second sealing arrangement, and the second sealing arrangement comprises the features of the sealing arrangement according to the present invention, or the features of any of the embodiments of the sealing arrangement discussed herein.

The features and embodiments of the sealing arrangement and the apparatus, respectively, discussed herein may be combined in various possible ways providing further advantageous embodiments.

Further advantageous embodiments of the sealing arrangement and the apparatus, respectively, according to the present invention and further advantages with the present invention emerge from the detailed description of embodiments.

### Brief Description of the Drawings

The present invention will now be described, for exemplary purposes, in more detail by way of embodiments and with reference to the enclosed drawings, in which:
- Fig. 1: is a schematic view of the pressure device according to an embodiment of the present invention;
- Fig. 2: is a schematic top view of the of the pressure device of Fig. 1 provided in a holder;
- Fig. 3: is a schematic cross-sectional view of the sealing arrangement according to an embodiment of the present invention illustrating the pressure device provided in the holder shown in Fig. 2 and a sealing element;
- Fig. 4: is a schematic view of a collar of the pressure device according to an embodiment of the present invention;
- Fig. 5: is schematic cross-sectional view of the collar of Fig. 5;
- Fig. 6: is a schematic view of a nipple element of the pressure device according to an embodiment of the present invention;
- Fig. 7: is schematic side view of the nipple element of Fig. 6;
- Fig. 8: is schematic view of a tube of the pressure device of the pressure device according to an embodiment of the present invention;
- Fig. 9: is schematic cross-sectional view of the tube of Fig. 8;
- Fig. 10: is a schematic view of a nipple element of the pressure device according to an embodiment of the present invention;
- Fig. 11: is schematic view of an end-plug of the pressure device according to an embodiment the present invention,
- Fig. 12: is a schematic side view of an apparatus provided with an embodiment of the sealing arrangement according to the present invention; and
- Fig. 13: is a schematic top view of the of the vat segments of Fig. 12.

### Detailed Description of Embodiments of the present invention

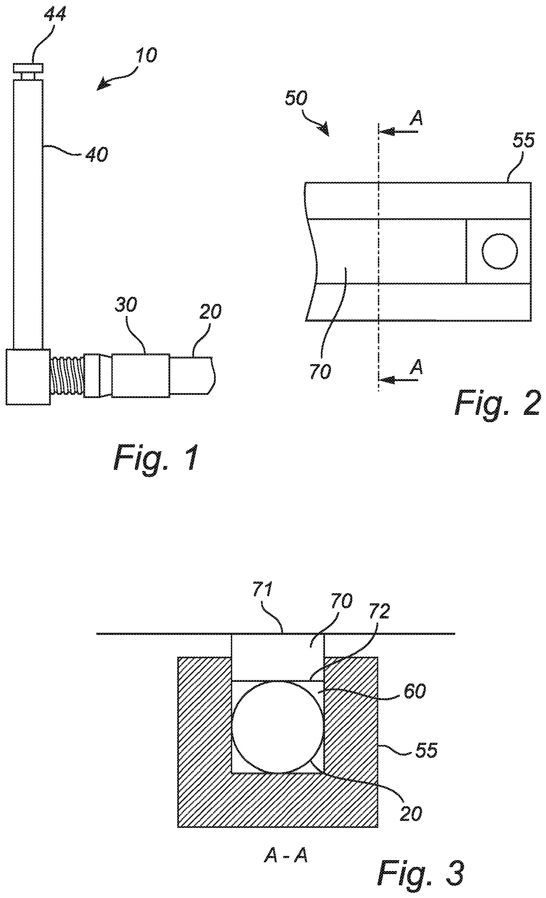

With reference to Figs. 1 - 11, a pressure device according to embodiments of the present invention will be discussed. The pressure device 10 for a sealing arrangement 50, as shown e.g. in Fig. 3, comprises an elastic tube 20, which is expandable by a pressurizing fluid and has a first cross-section area 22. The sealing arrangement 50 included a movable sealing element 70 and a holder 55 comprising an extended groove 60 in which the holder 55 is mounted. The elastic tube 20 has rotational symmetric cross-section area 22. Further, the pressure device 10 comprises at least one collar 30 having an inner cross-section area 32 corresponding to the first cross-section area 22 of the elastic tube 20. The pressure device 10 further comprises a nipple element 40, 80.

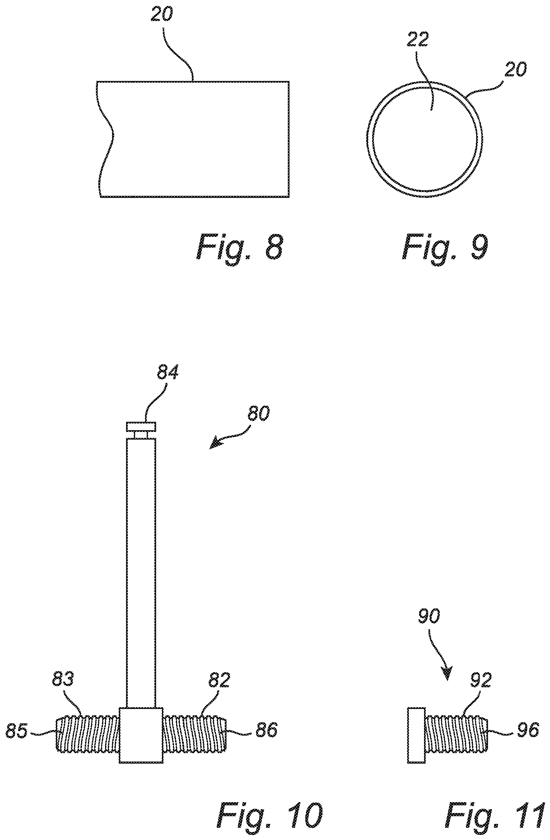

The collar 30 is arranged to connect the elastic tube 20 to the nipple element 40 according to a first embodiment, or the nipple element 80 according to a second embodiment shown in Fig. 10, and to fluid-tightly and firmly lock the elastic tube 20 to the nipple element 40. Firmly locking the elastic tube to the nipple element means that the elastic tube is not able move relative the nipple element.

The nipple element 40, 80 is provided with a nipple 44, 84 arranged for connection to a pressurizing fluid supply, wherein the elastic tube can be pressurized when connected to the fluid supply via the nipple element.

When pressurized, the elastic tube 20 acts on the movable sealing element 70 such that the movable sealing element 70 is pressed in an outward direction by the expanding elastic tube 20 to bear against a surface 71 to provide a seal, for example, against an end surface of a rotatable drum.

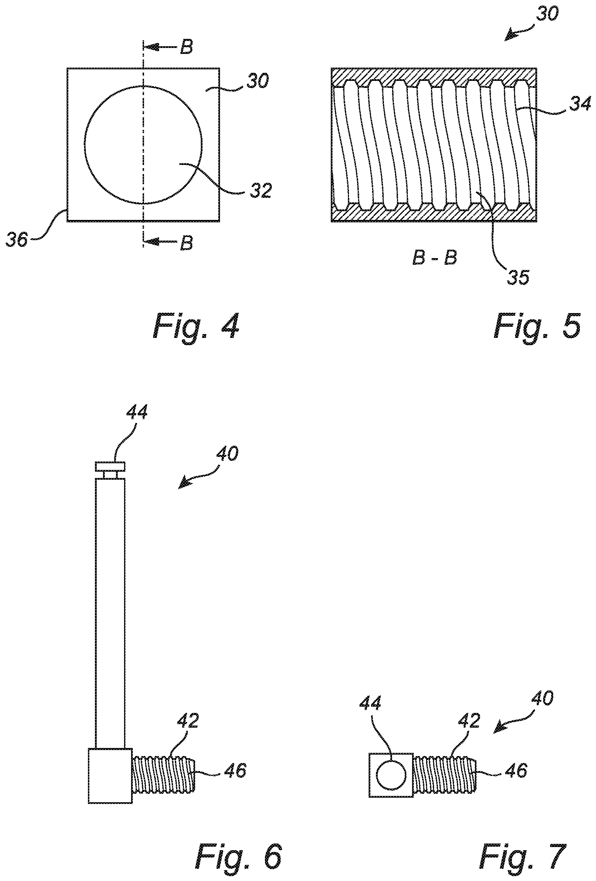

According to embodiments, e.g. as shown in Fig. 5, an inner surface 35 of the collar 30 is provided with a structure, for example, a thread 34. The structure 34 corresponds to a structure 46, e.g. a thread 46, provided on an outer surface of an extension part 42 of the nipple element 40 arranged to fit into the elastic tube 20.

The extension part 42 is arranged to conduct pressurizing fluid into the elastic tube 20, wherein the collar 30 can be threaded or screwed over a part of the elastic tube 20 enclosing the extension part 42 to fluid-tightly and firmly lock the elastic tube 20 to the nipple element 40 such that when locked, the elastic tube 20 will not move in relation to the nipple element 40.

In Fig. 1, the collar 30 is shown in a state where it is threaded to lock the tube 20 to the nipple element 40.

In embodiments of the present invention, as shown in Fig. 6, the thread 46 of the outer surface of the extension part 42 of the nipple element 40 is closed at an end adjacent to the nipple 44.

According to a further embodiment of the nipple element 80 shown in Fig. 10, the nipple element 80 is arranged with a first extension part 82 provided with a thread 86 and a second extension part 83 provided with a thread 85, wherein the first and second extension part 82, 83 are arranged to fit into an elastic tube 20. As illustrated, the nipple element 80 is arranged with T-like shape.

According to embodiments of the present invention, the groove 60 of the holder 55 is square shaped and an outer surface 36 of the collar is square shaped and arranged to fit into the groove 60. However, in other embodiments of the present invention, the outer surface of the collar is circular, rounded or elliptically shaped, and arranged to fit into the groove

According to embodiments of the present invention, as shown in Fig. 11, the pressure device may also comprise an end-plug 90 for fluid-tightly terminate an end of the tube 20. In order to provide sufficient fluid-tightness and to allow an easier introduction of the end-plug into the tube 20, the end-plug is provided with a thread 96, which may be closed at the end part. The end-plug may be tightly locked or connected to the tube by a collar 30.

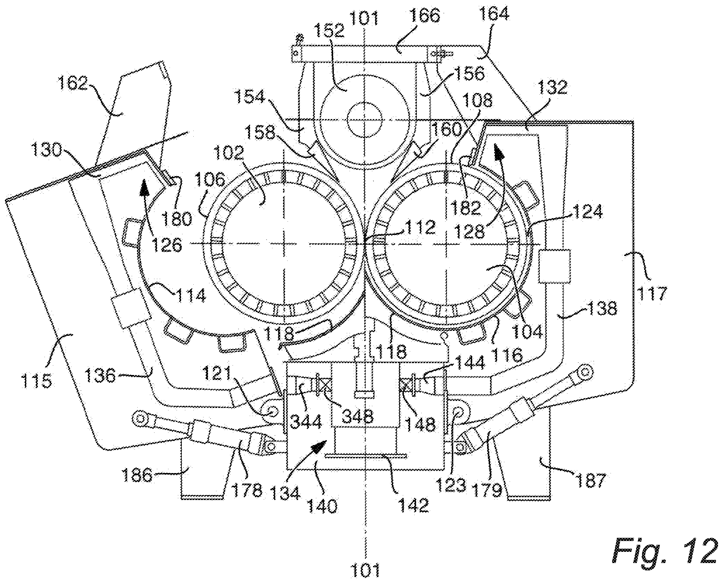

Fig. 12 shows an embodiment of an apparatus for dewatering cellulose-containing pulp provided with an embodiment of the sealing arrangement and pressure device according to the present invention. The apparatus may also be arranged to wash the pulp. The apparatus may have a substantially symmetric configuration with regard to a symmetry plane 101, and in Fig. 12, the left side of the apparatus, i.e. to the left of the symmetry plane 101, illustrates the apparatus in an opened position, whereas the right side of the apparatus, i.e. to the right of the symmetry plane 101, illustrates the apparatus in a closed and operating position. The apparatus may comprise a first rotatable drum 102 or press roll and a second rotatable drum 104 or press roll, each drum 102, 104 having a permeable outer surface 106, 108. Each permeable outer surface 106, 108 extends axially between a first end and a second end of the respective drum 102, 104. The first drum 102 is rotatable about a first axis of rotation, and the second drum 104 is rotatable about a second axis of rotation. The drums 102, 104 may comprise a plurality of filtrate channels 110 radially inwards of the outer surface 106, 108 to lead evacuated filtrate away. The two drums 102, 104 define a press nip 112 between them, in which press nip the pulp is pressed, and are arranged to rotate in opposite directions. The apparatus may be arranged to feed the pulp through the press nip 112 in a substantially vertical direction from below upwards, however, the pulp can be fed through the press nip 112 in other directions.

The apparatus may comprise a casing which includes a vat 114, 116, 118, in which the drums 102, 104 are installed, the vat 114, 116, 118 partly enclosing the outer surface 106, 108 of each drum 102, 104, whereby a space or gap 124, 125 for each drum 102, 104 is defined, limited by the vat 114, 116, 118 and the outer surface 106, 108 of the respective drum 102, 104. The vat 114, 116, 118 may be built up of a first side vat segment 114 which partly encloses the outer surface 106 of the first drum 102, a second side vat segment 116 which partly encloses the outer surface 108 of the second drum 104, and a central vat segment 118 partly enclosing the outer surface 106, 108 of the drums 102, 104 between the press nip 112 and the side vat segments 114, 116. The central vat segment 118 may be movable in a substantially vertical direction for providing additional accessibility to the region in proximity to the press nip 112. In Fig. 12, on the left side of the apparatus, the central vat segment 118 is shown in an inoperative opened position, whereas on the right side of the apparatus, the central vat segment 118 is shown in an operative closed position.

As mentioned above, a gap 124, 125 may be formed between the vat 114, 116, 118 and the outer surface 106, 108 of the drums 102, 104. In Fig. 12, only the right side of the apparatus illustrated the apparatus in a closed and operating position, and thus, only the gap 124 with regard to the second drum 104 and the vat 116, 118 is shown, whereas the gap 125 with regard to the first drum 102 and the vat 114, 118 is not present in Fig. 12. However, a corresponding gap 125 with regard to the first drum 102 is illustrated by a broken line in Fig. 12. When the left side of the apparatus is in a corresponding closed and operating position, a gap is provided between the first drum 102 and the vat 114, 118.

The casing may comprise a first side casing member 115 which extends between the ends of the first drum 102 and to which the first side vat segment 114 is mounted, and a second side casing member 117 which extends between the ends of the second drum 104 and to which the second side vat segment 116 is mounted. The side casing members 115, 117, together with their side vat segments 114, 116, may be pivotable about a pivot axis 121, 123, and movable between a closed position and an opened position for providing access to the drums 102, 104. In Fig. 12, on the left side of the apparatus, the first side casing member 115 is in the opened position, whereby access to the drum 102 is provided, whereas on the right side of the apparatus, the second side casing member 117 is in the closed position. Alternatively, only one of the side casing members could be movable, whereas the other could be stationary, or both side casing members could be stationary. The movable side casing member could also be movable in other ways than by pivoting about the respective pivot axis 121, 123.

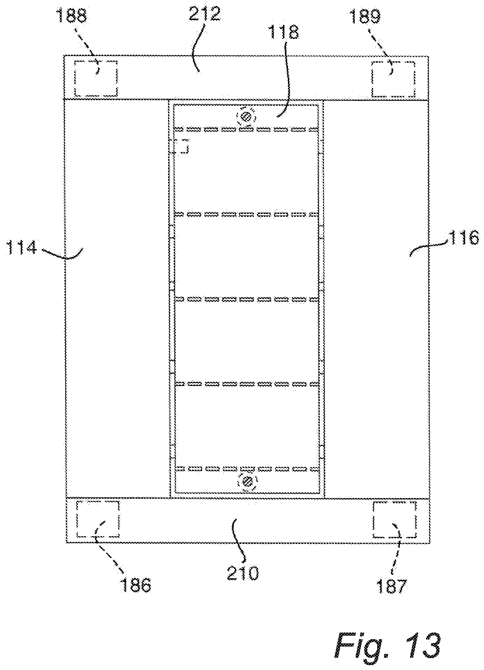

Further, the casing may include a central casing member 140, in the form of a stationary base unit 140 positioned substantially below the first and second drums 102, 104, a stationary first end casing member 210 in the form of a first gable, and a stationary second end casing member 212 in the form of a second gable (the end casing members 210, 212 being shown in Fig. 13). The drums 102, 104 may be rotatably mounted to the end casing members 210, 212, and thus be rotatable in relation to the end casing members 210, 212. The central casing member 140 may be mounted to the end casing members 210, 212. Each side casing member 115, 117 may be pivotally attached to the central casing member 140, and each side casing member 115, 117 may also be connected to the central casing member 140 via a respective hydraulic cylinder 178, 179 for controlling the movement of the respective side casing member 115, 117. The central vat segment 118 may be mounted to the central casing member 140.

Sealing arrangements may be provided between each movable side casing member 115, 117 and the central casing member 140, and between each movable side casing member 115, 117 and the end casing members 210, 212. Further, axial sealing units 180, 182 may be mounted to each side casing member 115, 117, each axial sealing unit 180, 182 extending along to the longitudinal extension of the respective drum 102, 104 and is adapted to abut the outer surface 106, 108 of the drum 102, 104 when the side casing member 115, 117 is in its closed position. The sealing arrangements and the axial sealing units 180, 182 are adapted to seal off the gap 124, 125 from the external surroundings, i.e. the atmosphere, at the position where the pulp is distributed to the gap 124, 125. Each axial sealing unit 180, 182 may be in the form of a scraper. Thus, by way of the above-mentioned sealing arrangements and axial sealing units 180, 182, the gap 124, 125 and the surfaces defining the gap 124, 125 are sealed off from the atmosphere.

The apparatus may comprise a first pulp distribution device 126 for distributing pulp on the first drum 102 and a second pulp distribution device 128 for distributing pulp on the second drum 104. Pulp to the distribution devices 126, 128 may be supplied in various ways known to the skilled person. The pulp distribution devices 126, 128 may be arranged to distribute pulp to the gap 124, 125 along the whole axial length of each drum 102, 104. The pulp distributed on the outer surface 106, 108 of the drum 102, 104 may form a mat on the drums 102, 104. From the pulp distribution devices 126, 128 to the press nip 112, the pulp is fed in the gap 124, 125 in the direction of rotation R₁, R₂ of the drums 102, 104 while being dewatered, or dewatered and washed.

Fig. 13 shows the central vat segment 118 in the apparatus as viewed from above with the drums excluded. The apparatus may rest on the ground via four legs 186, 187, 188, 189 (only two legs are shown in Fig. 12). In Fig. 13, the end casing members 210, 212 of the casing are schematically shown.

However, a pulp dewatering apparatus provided with the sealing arrangement according to the present invention may have a casing without movable side casing members.

According to another advantageous embodiments of the apparatus according to the present invention, at least one of the end casing members holds a second sealing arrangement for sealing between the second drum and the respective end casing member, the second drum being rotatable in relation to the second sealing arrangement, and the second sealing arrangement comprises the features of the first and/or second aspect of the present invention, or the features of any of the embodiments of the sealing arrangement discussed herein.

The features and embodiments of the sealing arrangement and the apparatus, respectively, discussed herein may be combined in various possible ways providing further advantageous embodiments.

Hence, the invention shall not be considered limited to the embodiments illustrated, but can be modified and altered in many ways by one skilled in the art, without departing from the scope of the appended claims.

## Claims

1. A sealing arrangement (50) including a movable sealing element (70) and a holder (55) comprising an extended groove (60) in which the movable sealing element is mounted, wherein the sealing arrangement (50) comprises a pressure device (10) including an elastic tube (20), which is expandable by a pressurizing fluid and has a rotational symmetric cross-section area (22); a nipple element (40; 80) having a nipple (44; 84) arranged for connection to a pressurizing fluid supply; at least one collar (30) arranged to connect the elastic tube (20) to the nipple element (40; 80) and to fluid-tightly lock the pressurized elastic tube (20) to the nipple element (40; 80); and wherein said elastic tube (20) acts on the movable sealing element (70) when pressurized, the movable sealing element being arranged to fit into the groove (60) and in contact with said elastic tube (20), the movable sealing element (70) being pressed in an outward direction by the expanding elastic tube (20) to thereby bear against a surface (71) to provide a seal, wherein an outer surface (36) of the collar (30) is square shaped, circular, rounded or elliptically shaped and in that the collar (30) is arranged to fit into the groove (60).

2. The sealing arrangement (50) according to claim 1, wherein the sealing arrangement (50) is arranged for sealing between a first drum (102) and an end casing member (210) included in an apparatus for processing pulp, the first drum being rotatable about an axis of rotation (107) in relation to the end casing member and the sealing arrangement, and the first drum being provided with a permeable outer surface (106) which axially extends between a first end (503) and a second end of the first drum, and at least at the first end the first drum is provided with an end surface (506), wherein the movable sealing element (70) is arranged to bear against a portion of the end surface of the first drum when the elastic tube is pressurized.

3. The sealing arrangement according to claim 1 or 2, wherein an inner surface (35) of the collar (30) is provided with a structure (34) corresponding to a structure (46; 85, 86) provided on an outer surface of an extension part (42; 82, 83) of the nipple element (40; 80) arranged to fit into the elastic tube (20).

4. The sealing arrangement according to claim 3, wherein said extension part (42; 82, 83) being arranged to conduct pressurizing fluid into the elastic tube (20), wherein the collar (30) can be threaded over a part of the elastic tube (20) enclosing the extension part (42; 82, 83) to fluid-tightly and firmly lock the elastic tube (20) to the nipple element (40; 80).

5. The sealing arrangement according to claim 3 or 4, wherein an inner surface (35) of the collar (30) is provided with a thread (34) corresponding to a thread (46; 85, 86) provided on an outer surface of an extension part (42; 82, 83) of the nipple element (40; 80) arranged to fit into the elastic tube (20), said extension part (42; 82, 83) being arranged to conduct pressurizing fluid into the elastic tube (20), wherein the collar (30) can be threaded over a part of the elastic tube (20) enclosing the extension part (42; 82, 83) to fluid-tightly and firmly lock the elastic tube (20) to the nipple element (40; 80).

6. The sealing arrangement according to claim 5, wherein the thread (46; 85, 86) of the outer surface of the extension part (42; 82, 83) of the nipple element (40) is closed at an end adjacent to the nipple (44).

7. The sealing arrangement according to claim 1 - 6, wherein the nipple element (80) is arranged with a first extension part (82) provided with a structure (86) and a second extension part (83) provided with a structure (85), wherein the first and second extension part (82, 83) are arranged to fit into an elastic tube (20).

8. The sealing arrangement according to claim 7, wherein the nipple element (80) is arranged with T-like shape.

9. The sealing arrangement according to claim 1 - 8, wherein the groove (60) is square shaped and the collar (30) is arranged to fit into the groove (60).

10. The sealing arrangement according to claim 1 - 9, further comprising an end-plug (90) for fluid-tightly terminate an end of the elastic tube (20).

11. An apparatus for processing pulp, comprising at least one first drum (102) rotatable about an axis of rotation (107) and provided with an outer surface (106) permeable to liquid, the outer surface axially extending between a first end (503) and a second end of the first drum, the apparatus is adapted to receive the pulp on the outer surface of the first drum and to process the pulp situated on the outer surface while rotating the first drum, and the apparatus is adapted to process the pulp by at least dewatering the pulp, the first drum being rotatably mounted to two end casing members (210, 212), at least at the first end (503) the first drum being provided with an end surface (506), and at least one of the end casing members holds a sealing arrangement (50) for sealing between the first drum and the respective end casing member, the first drum being rotatable in relation to the sealing arrangement, **characterized in that** the sealing arrangement (50) comprises the features mentioned in any of the claims 1 to 10.

12. An apparatus according to claim 11, wherein the apparatus comprises a second drum (104) rotatable about an axis of rotation and provided with an outer surface permeable to liquid, the first and second drums (102, 104) defining a press nip (112) between them, in which press nip the pulp is pressed, and in that the apparatus is arranged to feed the pulp through the press nip in the direction of rotation of the press rolls.

13. An apparatus according to claim 12, wherein at least one of the end casing members (210, 212) holds a second sealing arrangement (50) for sealing between the second drum (104) and the respective end casing member, the second drum being rotatable in relation to the second sealing arrangement, and in that the second sealing arrangement (50) comprises the features mentioned in any of the claims 1 to 10.

## Patentansprüche

1. Dichtungsanordnung (50), beinhaltend ein bewegliches Dichtungselement (70) und einen Halter (55), der eine verlängerte Nut (60) umfasst, in welcher das bewegliche Dichtungselement gelagert ist, wobei die Dichtungsanordnung (50) eine Druckvorrichtung (10) umfasst, die ein elastisches Rohr (20) beinhaltet, welches durch ein Druckfluid ausdehnbar ist und eine drehsymmetrische Querschnittsfläche (22) aufweist; ein Nippelelement (40; 80), das einen Nippel (44; 84) aufweist, der zum Anschluss an eine Druckfluidzufuhr angeordnet ist; mindestens einen Kragen (30), der angeordnet ist, um das elastische Rohr (20) an das Nippelelement (40; 80) anzuschließen und das unter Druck stehende elastische Rohr (20) fluiddicht mit dem Nippelelement (40; 80) zu verriegeln; und wobei das elastische Rohr (20) unter Druck auf das bewegliche Dichtungselement (70) einwirkt, wobei das bewegliche Dichtungselement so angeordnet ist, dass es in die Nut (60) passt und in Kontakt mit dem elastischen Rohr (20) steht, wobei das bewegliche Dichtungselement (70) durch das sich ausdehnende elastische Rohr (20) nach außen gedrückt wird, um dadurch an einer Oberfläche (71) anzuliegen, um eine Dichtung bereitzustellen, wobei eine Außenfläche (36) des Kragens (30) quadratisch, kreisförmig, abgerundet oder elliptisch geformt ist und der Kragen (30) angeordnet ist, um in die Nut (60) zu passen.

2. Dichtungsanordnung (50) nach Anspruch 1, wobei die Dichtungsanordnung (50) zum Abdichten zwischen einer ersten Trommel (102) und einem Endgehäuseelement (210) angeordnet ist, das in einer Einrichtung zur Verarbeitung von Zellstoff enthalten ist, wobei die erste Trommel um eine Drehachse (107) in Bezug auf das Endgehäuseelement und die Dichtungsanordnung drehbar ist und die erste Trommel mit einer durchlässigen Außenfläche (106) bereitgestellt ist, welche sich axial zwischen einem ersten Ende (503) und einem zweiten Ende der ersten Trommel erstreckt, und die erste Trommel mindestens an dem ersten Ende mit einer Endfläche (506) bereitgestellt ist, wobei das bewegliche Dichtungselement (70) angeordnet ist, um an einem Abschnitt der Endfläche der ersten Trommel anzuliegen, wenn das elastische Rohr unter Druck gesetzt wird.

3. Dichtungsanordnung nach Anspruch 1 oder 2, wobei eine Innenfläche (35) des Kragens (30) mit einer Struktur (34) entsprechend einer Struktur (46; 85, 86) bereitgestellt ist, die an einer Außenfläche eines Verlängerungsteils (42; 82, 83) des Nippelelements (40; 80) bereitgestellt ist, das angeordnet ist, um in das elastische Rohr (20) zu passen.

4. Dichtungsanordnung nach Anspruch 3, wobei das Verlängerungsteil (42; 82, 83) angeordnet ist, um Druckfluid in das elastische Rohr (20) zu leiten, wobei der Kragen (30) über einen Teil des elastischen Rohres (20), der das Verlängerungsteil (42; 82, 83) einhaust, aufgezogen werden kann, um das elastische Rohr (20) fluiddicht und fest mit dem Nippelelement (40; 80) zu verriegeln.

5. Dichtungsanordnung nach Anspruch 3 oder 4, wobei eine Innenfläche (35) des Kragens (30) mit einem Gewinde (34) entsprechend einem Gewinde (46; 85, 86) bereitgestellt ist, das an einer Außenfläche eines Verlängerungsteils (42; 82, 83) des Nippelelements (40; 80) bereitgestellt ist, das angeordnet ist, um in das elastische Rohr (20) zu passen, wobei das Verlängerungsteil (42; 82, 83) angeordnet ist, um Druckfluid in das elastische Rohr (20) zu leiten, wobei der Kragen (30) über einen Teil des elastischen Rohres (20), der das Verlängerungsteil (42; 82, 83) einhaust, aufgezogen werden kann, um das elastische Rohr (20) fluiddicht und fest mit dem Nippelelement (40; 80) zu verriegeln.

6. Dichtungsanordnung nach Anspruch 5, wobei das Gewinde (46; 85, 86) der Außenfläche des Verlängerungsteils (42; 82, 83) des Nippelelements (40) an einem Ende benachbart an dem Nippel (44) verschlossen ist.

7. Dichtungsanordnung nach Anspruch 1-6, wobei das Nippelelement (80) mit einem ersten Verlängerungsteil (82), das mit einer Struktur (86) bereitgestellt ist, und einem zweiten Verlängerungsteil (83), das mit einer Struktur (85) bereitgestellt ist, angeordnet ist, wobei das erste und das zweite Verlängerungsteil (82, 83) angeordnet sind, um in ein elastisches Rohr (20) zu passen.

8. Dichtungsanordnung nach Anspruch 7, wobei das Nippelelement (80) T-förmig angeordnet ist.

9. Dichtungsanordnung nach Anspruch 1-8, wobei die Nut (60) quadratisch geformt ist und der Kragen (30) angeordnet ist, um in die Nut (60) zu passen.

10. Dichtungsanordnung nach Anspruch 1-9, ferner umfassend einen Endstopfen (90) zum fluiddichten Abschluss eines Endes des elastischen Rohres (20) .

11. Einrichtung zur Verarbeitung von Zellstoff, umfassend mindestens eine erste Trommel (102), die um eine Drehachse (107) drehbar ist und mit einer für Flüssigkeit durchlässigen Außenfläche (106) bereitgestellt ist, wobei sich die Außenfläche axial zwischen einem ersten Ende (503) und einem zweiten Ende der ersten Trommel erstreckt, wobei die Einrichtung dazu ausgelegt ist, den Zellstoff auf der Außenfläche der ersten Trommel aufzunehmen und den auf der Außenfläche befindlichen Zellstoff unter Drehung der ersten Trommel zu verarbeiten, und die Einrichtung dazu ausgelegt ist, den Zellstoff durch mindestens Entwässern des Zellstoffs zu verarbeiten, wobei die erste Trommel drehbar an zwei Endgehäuseelementen (210, 212) gelagert ist, wobei die erste Trommel mindestens an dem ersten Ende (503) mit einer Endfläche (506) bereitgestellt ist und mindestens eines der Endgehäuseelemente eine Dichtungsanordnung (50) zum Abdichten zwischen der ersten Trommel und dem jeweiligen Endgehäuseelement hält, wobei die erste Trommel in Bezug auf die Dichtungsanordnung drehbar ist, **dadurch gekennzeichnet, dass** die Dichtungsanordnung (50) die in einem der Ansprüche 1 bis 10 aufgeführten Merkmale umfasst.

12. Vorrichtung nach Anspruch 11, wobei die Einrichtung eine zweite Trommel (104) umfasst, die um eine Drehachse drehbar ist und mit einer für Flüssigkeit durchlässigen Außenfläche bereitgestellt ist, wobei die erste und die zweite Trommel (102, 104) einen Pressspalt (112) zwischen sich definieren, in welchen der Zellstoff gepresst wird, und die Einrichtung angeordnet ist, um den Zellstoff durch den Pressspalt in der Drehrichtung der Presswalzen zuzuführen.

13. Vorrichtung nach Anspruch 12, wobei mindestens eines der Endgehäuseelemente (210, 212) eine zweite Dichtungsanordnung (50) zum Abdichten zwischen der zweiten Trommel (104) und dem jeweiligen Endgehäuseelement hält, wobei die zweite Trommel in Bezug auf die zweite Dichtungsanordnung drehbar ist und die zweite Dichtungsanordnung (50) die in einem der Ansprüche 1 bis 10 aufgeführten Merkmale umfasst.

## Revendications

1. Agencement d'étanchéité (50) comportant un élément d'étanchéité mobile (70) et un support (55) comprenant une rainure étendue (60) dans laquelle l'élément d'étanchéité mobile est monté, dans lequel l'agencement d'étanchéité (50) comprend un dispositif de pression (10) comportant un tube élastique (20), qui est extensible par un fluide de pressurisation et présente une zone de section transversale à symétrie de rotation (22) ; un élément de manchon (40 ; 80) ayant un manchon (44 ; 84) agencé pour une liaison à une alimentation en fluide de pressurisation ; au moins un collier (30) agencé pour relier le tube élastique (20) à l'élément de manchon (40 ; 80) et pour verrouiller de manière étanche aux fluides le tube élastique sous pression (20) à l'élément de manchon (40 ; 80) ; et dans lequel ledit tube élastique (20) agit sur l'élément d'étanchéité mobile (70) lorsqu'il est sous pression, l'élément d'étanchéité mobile étant agencé pour s'emboîter dans la rainure (60) et en contact avec ledit tube élastique (20), l'élément d'étanchéité mobile (70) étant pressé dans une direction ver l'extérieur par le tube élastique en expansion (20) pour s'appuyer ainsi contre une surface (71) pour fournir un joint d'étanchéité, dans lequel une surface externe (36) du collier (30) est de forme carrée, circulaire, arrondie ou elliptique et dans lequel le collier (30) est agencé pour s'emboîter dans la rainure (60).

2. Agencement d'étanchéité (50) selon la revendication 1, dans lequel l'agencement d'étanchéité (50) est agencé pour assurer l'étanchéité entre un premier tambour (102) et un élément de boîtier d'extrémité (210) compris dans un appareil de traitement de pâte de papier, le premier tambour étant rotatif autour d'un axe de rotation (107) par rapport à l'élément de boîtier d'extrémité et à l'agencement d'étanchéité, et le premier tambour étant pourvu d'une surface externe perméable (106) qui s'étend axialement entre une première extrémité (503) et une seconde extrémité du premier tambour, et au moins à la première extrémité, le premier tambour est pourvue d'une surface d'extrémité (506), dans lequel l'élément d'étanchéité mobile (70) est agencé pour s'appuyer contre une partie de la surface d'extrémité du premier tambour lorsque le tube élastique est mis sous pression.

3. Agencement d'étanchéité selon la revendication 1 ou 2, dans lequel une surface interne (35) du collier (30) est pourvue d'une structure (34) correspondant à une structure (46 ; 85, 86) prévue sur une surface externe d'une partie d'extension (42 ; 82, 83) de l'élément de manchon (40 ; 80) agencée pour s'emboîter dans le tube élastique (20).

4. Agencement d'étanchéité selon la revendication 3, dans lequel ladite partie d'extension (42 ; 82, 83) étant agencée pour conduire un fluide de pressurisation dans le tube élastique (20), dans lequel le collier (30) peut être fileté sur une partie du tube élastique (20) enfermant la partie d'extension (42 ; 82, 83) pour verrouiller de manière étanche aux fluides et fermement le tube élastique (20) à l'élément de manchon (40 ; 80).

5. Agencement d'étanchéité selon la revendication 3 ou 4, dans lequel une surface interne (35) du collier (30) est munie d'un filetage (34) correspondant à un filetage (46 ; 85, 86) prévu sur une surface externe d'une partie d'extension (42 ; 82, 83) de l'élément de manchon (40 ; 80) agencée pour s'emboîter dans le tube élastique (20), ladite partie d'extension (42 ; 82, 83) étant agencée pour conduire un fluide de pressurisation dans le tube élastique (20), dans lequel le collier (30) peut être fileté sur une partie du tube élastique (20) entourant la partie d'extension (42 ; 82, 83) pour verrouiller de manière étanche aux fluides et fermement le tube élastique (20) à l'élément de manchon (40 ; 80).

6. Agencement d'étanchéité selon la revendication 5, dans lequel le filetage (46 ; 85, 86) de la surface externe de la partie d'extension (42 ; 82, 83) de l'élément de manchon (40) est fermé à une extrémité adjacente au manchon (44).

7. Agencement d'étanchéité selon les revendications 1 à 6, dans lequel l'élément de manchon (80) est agencé avec une première partie d'extension (82) pourvue d'une structure (86) et une seconde partie d'extension (83) pourvue d'une structure (85), dans lequel les première et seconde parties d'extension (82, 83) sont agencées pour s'emboîter dans un tube élastique (20) .

8. Agencement d'étanchéité selon la revendication 7, dans lequel l'élément de manchon (80) est agencé en forme de T.

9. Agencement d'étanchéité selon les revendications 1 à 8, dans lequel la rainure (60) est de forme carrée et le collier (30) est agencé pour s'emboîter dans la rainure (60).

10. Agencement d'étanchéité selon les revendications 1 à 9, comprenant également un bouchon d'extrémité (90) pour terminer de manière étanche aux fluides une extrémité du tube élastique (20) .

11. Appareil de traitement de pâte de papier, comprenant au moins un premier tambour (102) rotatif autour d'un axe de rotation (107) et pourvu d'une surface externe (106) perméable aux liquides, la surface externe s'étendant axialement entre une première extrémité (503) et une seconde extrémité du premier tambour, l'appareil est conçu pour recevoir la pâte de papier sur la surface externe du premier tambour et pour traiter la pâte de papier située sur la surface externe tout en faisant tourner le premier tambour, et l'appareil est conçu pour traiter la pâte de papier au moins par déshydratation de la pâte de papier, le premier tambour étant monté rotatif sur deux éléments de boîtier d'extrémité (210, 212), au moins à la première extrémité (503) le premier tambour étant pourvu d'une surface d'extrémité (506), et au moins l'un des éléments de boîtier d'extrémité maintient un agencement d'étanchéité (50) pour assurer l'étanchéité entre le premier tambour et l'élément de boîtier d'extrémité respectif, le premier tambour étant rotatif par rapport à l'agencement d'étanchéité, **caractérisé en ce que** l'agencement d'étanchéité (50) comprend les caractéristiques selon l'une quelconque des revendications 1 à 10.

12. Appareil selon la revendication 11, dans lequel l'appareil comprend un second tambour (104) rotatif autour d'un axe de rotation et pourvu d'une surface externe perméable aux liquides, les premier et second tambours (102, 104) définissant entre eux une pince de presse (112) dans laquelle la pâte de papier est pressée, et dans lequel l'appareil est agencé pour amener la pâte de papier à travers la pince de presse dans le sens de rotation des rouleaux de presse.

13. Appareil selon la revendication 12, dans lequel au moins l'un des éléments de boîtier d'extrémité (210, 212) porte un second agencement d'étanchéité (50) pour assurer l'étanchéité entre le second tambour (104) et l'élément de boîtier d'extrémité respectif, le second tambour étant rotatif par rapport au second agencement d'étanchéité, et dans lequel le second agencement d'étanchéité (50) comprend les caractéristiques selon l'une quelconque des revendications 1 à 10.
